# EUROPEAN PATENT APPLICATION

(11) **EP 3 782 838 A1**
(43) Date of publication of application: **24.02.2021**
(21) Application number: 19781887.5
(22) Date of filing: 01.04.2019
(51) Int. Cl.: B60K 17/356, F16H 39/02, F16H 61/4008

(54) **HYDRAULIC PROPULSION SYSTEM FOR FOUR-WHEEL-DRIVE VEHICLES**

(30) Priority: 04.04.2018 ES 201831064 U
(71) Applicant: Sotavento Cafe SL, 41940 Tomares (ES)
(72) Inventor: NETO PEDRO, Antonio, 41940 Tomares (ES)
(74) Representative: Dargiewicz, Joanna
(86) International application number: PCT/ES2019/070218
(87) International publication number: WO 2019/193227

(57) **Abstract**

The purpose of the invention is to save fuel, which involves a significant reduction of polluting gases for exerting a force that can move a vehicle, by reducing the revolutions of the main motor or engine. For this purpose, the invention relates to a motor is connected to two transmissions associated with the propulsion means or front and rear wheels (11) of the vehicle, such that an output power shaft (4) of the main engine (1) is connected to a hydraulic variable-displacement piston pump (5) that is associated with a hydraulic circuit (6) with means for selectively recirculating the fluid to a pair of hydraulic motors (8) associated with corresponding differentials (9) of rear and front traction means, such that it is possible to activate either propulsion system, both propulsion systems simultaneously or neither of them.

## Description

### OBJECT OF THE INVENTION

This invention relates to a hydraulic propulsion system for four-wheel-drive land vehicles, and specifically to the means used in the application of force to the shafts of one or more transmission systems to move or propel the vehicle to which the system of the invention is applied.

The purpose of the invention is to save fuel, which involves a significant reduction of polluting gases (C0₂, CO, S0₂, etc.), for exerting a force that can move a vehicle, by reducing the revolutions of the main motor or engine.

### BACKGROUND OF THE INVENTION

Under a conventional system for propelling vehicles, a motor is supplied with fuel. When the speed of the vehicle is increased via a gearbox, the revolutions of the motor also increase and, by extension, so too does fuel consumption.

The means used to propel the vehicle are therefore as follows: fuel-gearbox-transmission-wheels.

The necessary force will not be exerted and the vehicle will not therefore be propelled unless the main motor operates at a high rpm, which requires significant fuel consumption.

In turn, the combustion of this fuel produces a large amount of polluting gases, which is obviously undesirable.

### DESCRIPTION OF THE INVENTION

As part of the propulsion system referenced under the invention, the issue related to consumption and pollution is resolved on the basis of a simple and effective solution.

Specifically, the system referenced under the invention involves a hydraulic variable-displacement piston pump that is associated with the main motor and produces pressure via a hydraulic circuit to move one or more hydraulic variable-displacement motors associated with the corresponding differential.

Consequently, there is no need for a gearbox as the hydraulic pump exploits the kinetic energy of the oil flow to move part of the liquid which will, in turn, drive the hydraulic motors which convert hydraulic pressure into angular displacement, i.e. rotation or revolution which, by virtue of being connected to the transmission system, will rotate or turn the vehicle propulsion means.

This system will therefore require less force, i.e. lower fuel consumption, to propel the vehicle than in any conventional propulsion system, as the hydraulic motor generates at least twice as many revolutions as the main motor or engine and as the hydraulic pump; moreover, despite the hydraulic motor increasing revolutions by more than double, it does not produce any pollution.

The system described above can be applied to any kind of vehicle, whether it is powered by combustion, electricity or any other means.

Finally, as the system incorporates a hydraulic variable-displacement piston pump, the flow applied to the pump may be variable which means that the flow applied to the hydraulic variable-displacement piston motor(s) may vary to allow the number of transmission revolutions to be adjusted for some of the main motor revolutions. This is not possible for traditional systems whose transmission characteristically includes a gearbox. As a result, consumption is able to be reduced by approximately 60%. However, when the vehicle travels a long distance at a constant speed, there is no reason for the hydraulic pump to operate at maximum power and the main motor is reduced to such an extent that the hydraulic motor(s), by virtue of the hydraulic pump, are able to maintain the required speed, with consumption being further reduced by approximately 20%.

Consequently, gas emissions are reduced and a modern vehicle that meets all regulatory gas emissions requirements is produced.

### DESCRIPTION OF DRAWINGS

To supplement the description below and with a view to further clarifying the characteristics of the invention, in accordance with a standard model used for preferred embodiment purposes, a set of drawings is attached as an integral part of this description. The drawings particularly, but not exclusively, represent as follows:
Figure 1. Shows a schematic plan view of a four-wheel-drive vehicle where the system referenced under the invention is in an initial condition and the circuit is loaded.
Figure 2. Shows a view equivalent to that of the previous figure, where the main motor of the vehicle is idling.
Figure 3. Shows a view similar to those of the previous figures, but where the vehicle is in forward movement.
Figure 4. Shows a view similar to those of the previous figures, but where the vehicle in reverse movement.
Figure 5. Shows a view similar to those of the previous figures, but where the vehicle is affected by pulldown and in forward movement.
Figure 6. Shows a view similar to those of the previous figures, but where the system is affected by pulldown and in reverse movement.
Figure 7. Shows a view similar to those of the previous figures, but where the front traction is not connected to the vehicle.
Figure 8. Shows a view similar to those of the previous figures, but where the rear traction is not connected to the vehicle.

### PREFERRED EMBODIMENT OF THE INVENTION

The references classified under the relevant nomenclature are listed below in a bid to explain more fully the components of the system to which the invention relates and the components of the vehicle to which the system is applied:
- 1 .: - Main motor
- 2.: - Manual or automatic acceleration.
- 3.: - Braking system.
- 4.: - Output power shaft.
- 5.: - Hydraulic variable-displacement piston pump.
- 6.: - Hydraulic circuit.
- 7.: - Hydraulic oil tank.
- 8.: - Front and/or rear hydraulic variable-displacement piston motor.
- 9.: - Front and rear differential.
- 10.: - Shaft and axle shaft.
- 11.: - Wheels.
- 12.: - Differential connecting shafts.
- 13.: - Electric pump.
- 14 and 14A.: Acceleration key and pedal.
- 15.: - Cooling radiator.
- 16.: - Reverse return solenoid valve.
- 17A and 17B.: Negative pressure non-return valves.
- 18.: - Forward movement return solenoid valve.
- 19.: - Non-return valve.
- 20.: - Circuit pressure gauge.
- 21.: - Tank pressure gauge.
- 22.: - Forward movement switch.
- 23.: - Reverse movement switch.
- 24.: - Braking circuit.
- 25.: - Forward or reverse movement key.
- 26.: - Vacuum valve.
- 27.: - Oil filter.
- 28.: - T-fitting.
- 29: and 29A. Rear disconnecting solenoid valves.
- 30: and 30A. Front disconnecting solenoid valves.

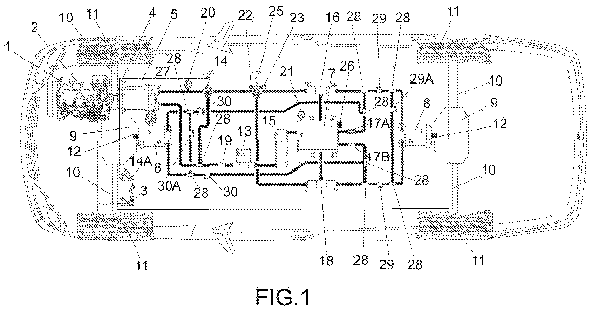

According to the corresponding nomenclature, figure 1 shows the loaded circuit with the main motor (1) with the manual or automatic accelerator (2), the pump and braking pedal circuit (3), output power shaft (4), to which the hydraulic pump is attached (5); in the front and rear shaft (10), the front and rear hydraulic motors (8) are also attached, via the connecting shafts (12), to the front and rear differential (9). The hydraulic pump (5) of figure 1 is loaded, including the front and rear hydraulic motors (8), circuit (6) and tank (7).

In turn, the hydraulic circuit (6) includes a radiator (15) which cools the hydraulic liquid circulating therein and a pressure control gauge (20).

Moreover, the circuit is assisted by an electric pump (13) whose purpose is to maintain the loaded circuit such that there is no shortage of pressure in the hydraulic pump (5).

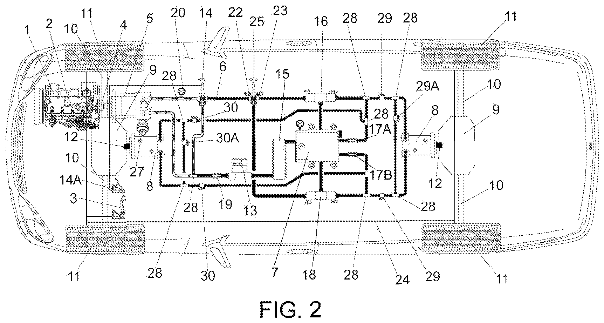

Figure 2 shows a stationary four-wheel-drive vehicle where the main motor is idling and the hydraulic pump (5) forms a closed circuit as the accelerator key (14) is in position "0", passing in front of the non-return valve (19), as indicated by the direction of the arrows, while the rest of the circuit (6) remains static.

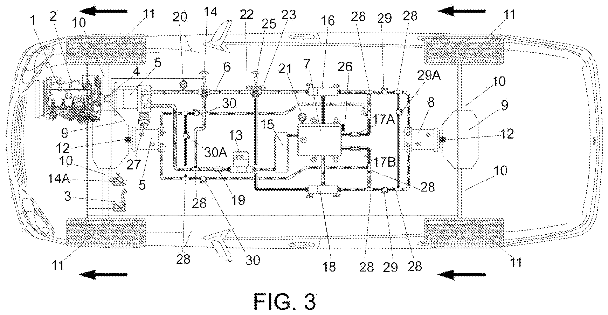

Figure 3 shows a four-wheel-drive vehicle in forward movement, where the key is in a forward position (25), acting on the forward movement switch (22) which instructs the reverse return solenoid valve (16) to open in relation to the circuit and to close in relation to the tank (7); this figure also shows the forward solenoid valve (18) which is open in relation to the tank (7) and the non-return valve (17A and 17B) which remain closed.

The acceleration key (14) is activated via the acceleration pedal (14A), and exerts pressure, via the circuit (6), on the front and rear hydraulic motors (8), such that if the key (14) does not open fully, the remaining pressure will return to the hydraulic pump (5)
dividing the circuit (6) in two, while the rear (29) and front (30) shut-off solenoid valves are open and the rear (29A) and front (30A) shut-off solenoid valves are closed.

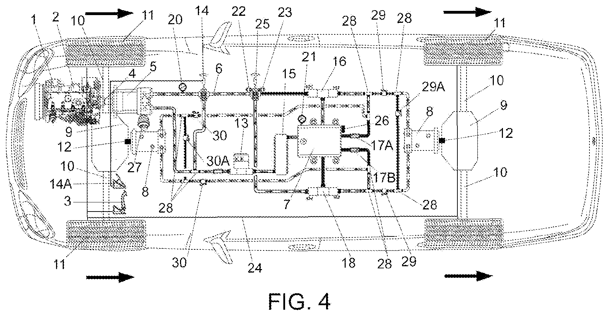

Figure 4 shows a four-wheel-drive vehicle in reverse movement, where the key is in a reverse position (25), acting on the reverse movement switch (23) which instructs the reverse return solenoid valve (16) to open in relation to the circuit (6) and to open relation to the tank (7); this figure also shows the forward solenoid valve (18) which is open in relation to the circuit (6) and closed in relation to the tank (7), while the non-return valves (17A and 17B) remain closed. The acceleration key (14) is activated via the pedal (14A) and exerts pressure, via the circuit (6), on the front and rear hydraulic motors (8), such that if the key (14) does not open fully, the remaining pressure will return to the hydraulic pump (5) dividing the circuit (6) pressure in two.

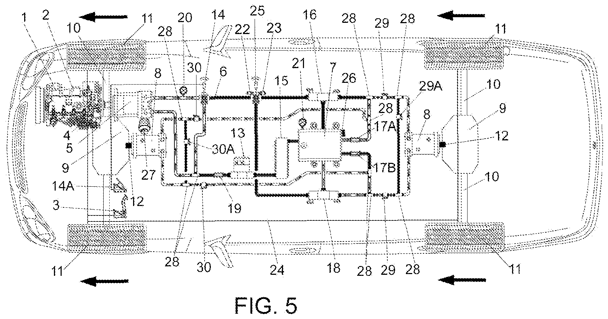

Figure 5 shows the four-wheel-drive vehicle where it is affected by pulldown and in forward movement, with acceleration key (14) in position "0", thereby turning the hydraulic pump (5) into a closed circuit, involving the acceleration key (14) and in front of the non-return valve (19). In this case, the front and rear (8) hydraulic motors continue to rotate where the wheels (11) are affected by pulldown, forming a closed circuit and absorbing the tank liquid (7) via the non-return valve (17A), involving the front and rear hydraulic motors (8) and the forward movement return solenoid valve (18) opened in relation to the tank (7).

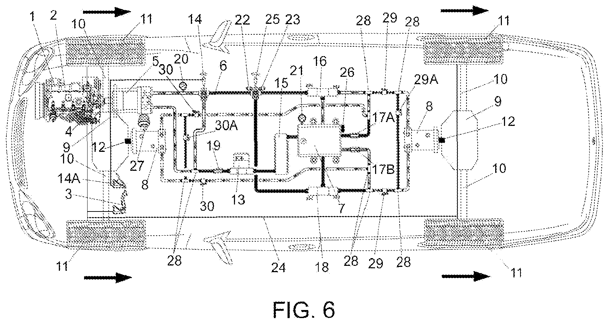

Figure 6 shows the four-wheel-drive vehicle where it is affected by pulldown and in reverse movement, with acceleration key (14) in position "0", thereby turning the hydraulic pump (5) into a closed circuit, involving the acceleration key (14) and in front of the non-return valve (19). In this case, the front and rear (8) hydraulic motors continue to rotate while the wheels (11) are affected by pulldown, forming a closed circuit and absorbing the tank liquid (7) via the non-return valve (17B), involving the front and rear hydraulic motors (8) while the reverse gear return solenoid valve (16) is open in relation to the tank (7).

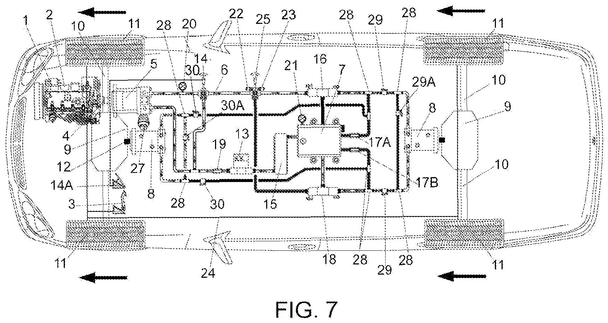

Figure 7 shows the four-wheel-drive vehicle where it is disconnected from its front traction, including the front traction disconnecting switch
set up in the control panel of the vehicle, such that, in pushing the switch, the front disconnecting solenoid valves (30) are instructed to close and the front disconnecting solenoid valve (30A) opens to form a closed circuit, regardless of whether the vehicle is in forward or reverse movement. The switch must be pressed again to re-establish connection.

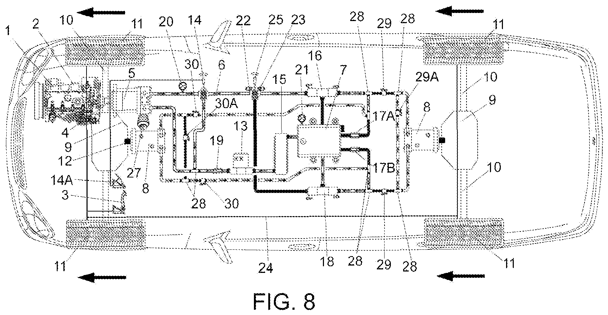

Finally, figure 8 shows the rear traction of the vehicle while it is disconnected, where the rear traction disconnecting switch, set up in the control panel of the vehicle, causes the rear disconnecting solenoid valve (29) to close when the switch is pressed, and the rear disconnecting solenoid valve (29A) also opens to form a closed circuit, regardless of whether the vehicle is in forward or reverse movement. The switch must be pressed again to re-establish connection.

In accordance with the description of the aforementioned figures, the system referenced under the invention is designed to be applied to any kind of vehicle, such as, for instance, a passenger car which includes a main engine (1) supplied by a fuel tank, with a manual or automatic accelerator (2), circuit (6), braking pump and pedal (3), output power shaft (4), the joint purpose of which is to rotate the wheels (11) via the corresponding differential (9) to allow the vehicle to move.

On the basis of these characteristics, the novelty of the invention is that a hydraulic pump (5) is inserted between the main engine (1) and the differentials (9) and this hydraulic pump (5), which is used to activate hydraulic motors (8), involves variable-displacement pistons and exploits the kinetic energy of the oil flow to move part of the liquid to a higher level and in turn to move the hydraulic motors (8) connected to the corresponding differentials (9) to rotate the corresponding shaft (10) of the wheels (11), whereby the vehicle is propelled, with greater power and safety being obtained in a 4x4 vehicle.

This system will require less force in the main motor (1) and therefore less fuel to propel the vehicle, as the hydraulic motors (8), which represent the novelty of the system, do not pollute and generate at least twice as many revolutions as the main motor (1) and the hydraulic pump (5).

The following example sets out the benefits of the system referenced under the invention in relation to a conventional system.

Specifically, a vehicle measuring a length of approximately 4.5 metres, weighing a total of 1,500 kg, characterised by its 130 KW turbo-diesel engine, operating at 2,500 rpm and at a speed of 120 km/h, consumes 7.5 litres/hour for a conventional propulsion system.

However, where the system referenced under the invention is applied to the same vehicle, it travels at a faster speed, such that when it operates at 1,500 rpm, the main motor (1) causes the hydraulic variable-displacement piston pump (5), in this case 105cc, to reach its maximum power, and the hydraulic variable-displacement motor (8) of 75cc operates at up to 3,800 rpm, thereby generating 200KW via the hydraulic pump (5) and reaching a speed of more than 160 km/hour, with a consumption of three litres/hour, i.e. a saving in the region of 60%.

There are obvious advantages to hydraulic propulsion when driving at a constant speed where the motor is able to operate at a lower rpm, as the pump does not require the whole power of the motor, and thereby enables the main motor to reduce consumption by 20%.

The aforementioned hydraulic propulsion system for four-wheel-drive vehicles enables an economic, safe, robust and easily maintainable hydraulic drive, without the need for any special infrastructure, and may be applied to any type of transport.

In short, in accordance with the example indicated above, it is discernible that, by using a single main motor (1) in conjunction with the system under the invention, a considerable amount of fuel can be saved and that this main motor requires less maintenance, as it operates at a low rpm, reduces its gas emissions and pollutes to a much lesser extent.

As a result, the proposed hydraulic propulsion system can be integrated into any newly-manufactured vehicle with a view to making its more efficient, economical and environmentally friendly.

## Claims

1. Hydraulic propulsion system for four-wheel-drive vehicles, formed by a main engine or motor (1) powered by combustion, electricity or by any other means, to drive two transmission systems associated with the propulsion means or front and rear wheels (11) of the vehicle; it is **characterised in that** the output power shaft (4) of the main motor (1) is connected to a hydraulic variable-displacement piston pump (5), associated with a hydraulic circuit (6) including an oil filter (27), a pressure control gauge (20), a hydraulic liquid tank (7) and a vacuum valve (26) and pressure control gauge (21) in the tank; this circuit (6) has the means for selectively recirculating the fluid driven by the hydraulic pump (5) to a pair of hydraulic variable-displacement piston motors (8) associated with the corresponding differentials (9) of rear and front traction means associated with the wheels (11) of the vehicle, respectively, having arranged for the hydraulic circuit (6) to include valves and solenoid valves (16), (17A), (17B), (18), (19), (29), (29A), (30) and (30A) for the controlled recirculation of the hydraulic fluid driven by the hydraulic pump (5) to either hydraulic motor (8), both hydraulic motors or neither of them, such that it is possible to drive either propulsion system, both propulsion systems simultaneously or neither of them, with the special feature that the circuit (6) has a key (25) to change the forward/reverse circulation direction.

2. Hydraulic propulsion system for four-wheel-drive vehicles, according to claim 1, **characterised in that** the hydraulic circuit (6) includes a radiator (15) which cools the hydraulic liquid circulating therein.

3. Hydraulic propulsion system for four-wheel-drive vehicles, according to claim 1, **characterised in that** the hydraulic circuit (6) includes the means to control the hydraulic pressure in the various principal components of the system.

## Amended claims

### Amended claims under Art. 19.1 PCT

1. Hydraulic propulsion system for four-wheel-drive vehicles, formed by a main engine or motor (1) powered by combustion, electricity or by any other means, to drive two transmission systems associated with the propulsion means or front and rear wheels (11) of the vehicle; it is **characterised in that** the output power shaft (4) of the main motor (1) is directly connected to a hydraulic variable-displacement piston pump (5), associated with a hydraulic circuit (6) including an oil filter (27), a pressure control gauge (20), a hydraulic liquid tank (7) and a vacuum valve (26) and pressure control gauge (21) in the tank; this circuit (6) has the means for selectively recirculating the fluid driven by the hydraulic pump (5) to a pair of hydraulic variable-displacement piston motors (8) directly associated with the corresponding differentials (9) of rear and front traction means associated with the wheels (11) of the vehicle, respectively, having arranged for the hydraulic circuit (6) to include valves and solenoid valves (16), (17A), (17B), (18), (19), (29), (29A), (30) and (30A) for the controlled recirculation of the hydraulic fluid driven by the hydraulic pump (5) to either hydraulic motor (8), both hydraulic motors or neither of them, such that it is possible to drive either propulsion system, both propulsion systems simultaneously or neither of them, with the special feature that the circuit (6) has a key (25) to change the forward/reverse circulation direction.

2. Hydraulic propulsion system for four-wheel-drive vehicles, according to claim 1, **characterised in that** the hydraulic circuit (6) includes a radiator (15) which cools the hydraulic liquid circulating therein.

3. Hydraulic propulsion system for four-wheel-drive vehicles, according to claim 1, **characterised in that** the hydraulic circuit (6) includes the means to control the hydraulic pressure in the various principal components of the system.

Statement under Art. 19.1 PCT
Specifically, it should be noted that this application establishes that the pressure is propelled from the hydraulic pump to the hydraulic motor via a circuit of solenoid valves and valves, without the need for any kind of accumulator or gearbox.

Greater emphasis is placed on the fact that the combustion motor and the hydraulic pump are connected **"directly"**, which means that there is no gearbox (to increase or reduce speed) or speed transmission, and that there is no need for any high and low-pressure accumulator.

These differences mean that the hydraulic motor is able to rotate from 0 to maximum power at the speed required by the driver, as the circuit of the system to which this application relates is able to operate effectively via the mechanical and manual solenoid valves without any kind of sudden retention when the circuit pressure is cut, albeit on an involuntary basis.
